# EUROPÄISCHE PATENTSCHRIFT

(11) **EP 1 919 744 B1**
(45) Veröffentlichungstag und Bekanntmachung des Hinweises auf die Patenterteilung: **26.02.2014**
(21) Anmeldenummer: 06764271.0
(22) Anmeldetag: 31.07.2006
(51) Int. Cl.: B60S 1/04

(54) **SCHEIBENWISCHVORRICHTUNG**
WINDSCREEN WIPER DEVICE
SYSTEME D'ESSUIE-GLACE

(30) Priorität: 23.08.2005 DE 102005039763
(43) Veröffentlichungstag der Anmeldung: 14.05.2008
(73) Patentinhaber: ROBERT BOSCH GMBH, 70442 Stuttgart (DE)
(72) Erfinder: RAPP, Juergen, 77886 Lauf (DE); VOLZ, Heiko, 77855 Achern (DE); STEIMEL, Thomas, 77815 Buehl (DE)
(86) Internationale Anmeldenummer: PCT/EP2006/064826
(87) Internationale Veröffentlichungsnummer: WO 2007/023063

(56) Entgegenhaltungen:
- WO-A-03/097419
- DE-A1- 10 048 253
- DE-A1- 19 851 845
- FR-A1- 2 775 456

## Beschreibung

Die Erfindung betrifft eine Scheibenwischanordnung, insbesondere für Kraftfahrzeuge, gemäß dem Oberbegriff des Anspruches 1.

Scheibenwischanordnungen, die bei einem Aufprall von Fußgängern nicht ausweichen, stellen für Fußgänger bei einem Unfall eine hohe Verletzungsgefahr dar, insbesondere durch die vorstehenden Wischerwellen. Mit solchen Scheibenwischanordnungen lassen sich die hohen Anforderungen an den Fußgängeraufprallschutz deshalb nicht erfüllen.

Aus der DE 198 41845 A1 ist eine Scheibenwischanordnung für Kraftfahrzeuge bekannt, die mit der Karosserie verschraubt ist, wobei in der Verbindung der Scheibenwischanordnung mit der Fahrzeugstruktur Aufnahmeöffnungen für Schrauben vorgesehen sind, die am Rand über einen Schlitz geöffnet sind. Diese Aufnahmeöffnungen sind an seitlichen Tragarmen der in Fahrzeugquerrichtung sich erstreckenden Scheibenwischanordnung vorgesehen und über die Schrauben ist diese mit zur Fahrzeugstruktur feststehenden Tragstegen verbunden. Die Schrauben durchsetzen die Tragstege in Bohrungen und legen die Tragarme gegen die Tragstege fest, wobei die Schrauben in den Aufnahmeöffnungen der Tragarme unter Zwischenschaltung von Gummibuchsen gehalten sind. Bei der Beaufschlagung der Wischerwellen in Richtung ihrer Erstreckung kann die über die Schrauben erfolgende Tragverbindung der Tragarme zu den Tragstegen dadurch aufgelöst werden, dass sich die Tragarme mit ihren Aufnahmeöffnungen relativ zu den Schrauben verlagern und die Schrauben über die Schlitze die Aufnahmeöffnungen verlassen, womit unter Verbleib der Schrauben an den Tragstegen die Wischanordnung zur Fahrzeugstruktur beweglich ist und in Belastungsrichtung ausweichen kann.

Eine weitere Scheibenwischanordnung, die über eine Dreipunktanordnung zur Tragstruktur des Fahrzeuges festgelegt ist, ist aus Fig. 5 der WO 03/097419 A1 bekannt. Von den Abstützungen zur Tragstruktur bestimmen zwei in Fahrzeugquerrichtung einander gegenüberliegende für die Scheibenwischanordnung eine Schwenkachse, zu der quer versetzt die dritte Abstützung liegt. Von den in Fahrzeugquerrichtung einander gegenüberliegenden Abstützungen zur Tragstruktur weist eine Aufnahmeöffnung auf, die in einem seitens der Tragstruktur vorgesehenen Haltegliede angeordnet ist. Die Aufnahmeöffnung ist geschlitzt ausgebildet, ihr Schlitz liegt parallel zur benachbarten Wischerwelle, und in die Aufnahmeöffnung greift ein elastisches Stützglied ein, das aus der Aufnahmeöffnung über deren Schlitz herausgeschoben wird, wenn die Scheibenwischanordnung mit einer in Achsrichtung der Wischerwelle wirkenden Kraft beaufschlagt wird, die die Haltekraft des Stützgliedes in der Aufnahmeöffnung überschreitet. Die Folge ist die Auflösung der Dreipunktabstützung für die Scheibenwischanordnung, womit die Scheibenwischanordnung belastungsbedingt aus ihrer Solllage zur Fahrzeugstruktur ausweichen kann.

Die Erfindung hat die Aufgabe, eine Scheibenwischanordnung der eingangs genannten Art dahingehend zu verbessern, dass das Verletzungsrisiko für Fußgänger beim Aufprall auf die Scheibenwischanordnung ohne Beeinträchtigung der für den Betrieb erforderlichen, zuverlässigen Verbindung zur Karosserie und der Montagevoraussetzungen reduziert wird.

Erreicht wird dies mit den Merkmalen des Anspruches 1, demzufolge die Aufnahmeöffnungen in der Karosserie vorgesehen sind, so dass beim Aufprall eines Fußgängers auf die Scheibenwischanordnung die Schrauben entlang der Schlitze aus den Ausnahmeöffnungen herausgedrückt werden. So kann die Scheibenwischanordnung ausweichen und das Verletzungsrisiko für den aufprallenden Fußgänger wird verringert. Um dies schon bei möglichst geringen Aufprallkräften zu erreichen, verlaufen die Schlitze parallel zu einer Wischerwelle und damit parallel zur Wirkrichtung der Aufprallkräfte des auf die Wischerwelle auftreffenden Unfallopfers. Die für den Betrieb erforderliche zuverlässige Verbindung der Scheibenwischanordnung zur Karosserie bleibt dadurch sichergestellt, dass die Schlitze im Übergangsbereich zu den Aufnahmeöffnungen eine Engstelle aufweisen, so dass die Schrauben beim Aufprall des Fußgängers zuerst die Engstelle passieren müssen, bevor sie aus der Aufnahmeöffnung austreten können. Durch die V-förmig sich erweiternde Ausbildung des Schlitzes in Austrittsrichtung der Schrauben, also dadurch, dass der Abstand der Schlitzränder hinter der Engstelle immer größer wird, ist zudem sichergestellt, dass die Schrauben nach dem Verlassen der Engstelle keine Reibkräfte mehr überwinden müssen und somit die Scheibenwischanordnung auch schnell beim Aufprall des Fußgängers ausweichen kann.

Im Hinblick auf die für den Betrieb lagefeste Abstützung der Scheibenwischanordnung über die in den Aufnahmeöffnungen der Karosserie gehaltenen Schrauben bei der geschlitzten Ausbildung der Aufnahmeöffnungen erweist es sich als zweckmäßig, wenn die Engstellen maximal so breit sind wie der Durchmesser der Schrauben, so dass über die Engstellen sichergestellt ist, dass die Schrauben auch bei Erschütterungen während der Fahrt zuverlässig in den Aufnahmeöffnungen verbleiben und erst bei unfallbedingt auftretenden Grenzkräften aus der Aufnahmeöffnung austreten können.

Zweckmäßigerweise werden die Schrauben jeweils durch ein Gummielement gesteckt und zusammen mit dem Gummielement in der jeweiligen Aufnahmeöffnung der Karosserie angeordnet, so dass sich über das Gummielement eine entsprechende Geräuschdämpfung ergibt.

Die Lösekraft, mit der die Schrauben zusammen mit den Gummielementen aus den Aufnahmeöffnungen herausgedrückt werden können, ist durch das Anzugsmoment für die Schrauben zu bestimmen, wobei die entsprechenden Reibkräfte auch durch die Dicke des die Aufnahmeöffnung enthaltenden Karosserieblechs, ebenso wie über die Geometrie der Engstelle zu beeinflussen sind.

Die Montage der Scheibenwischanordnung an der Karosserie wird dadurch erleichtert, dass den Schrauben eine an dem Gummielement befestigte Mutter zugeordnet ist, die beispielsweise durch Aufvulkanisieren, Kleben oder Umspritzen mit der Mutter verbunden ist.

Zweckmäßigerweise können an der Scheibenwischanordnung ebenfalls Aufnahmeöffnungen zur Aufnahme der Schrauben vorgesehen sein.

Nachfolgend wird ein Ausführungsbeispiel der erfindungsgemäßen Scheibenwischvorrichtung anhand der beiliegenden Zeichnungen näher erläutert.

Im Einzelnen zeigen:
- Fig. 1: eine Vorderansicht auf die Scheibenwischvorrichtung;
- Fig. 2: eine Seitenansicht auf die Scheibenwischvorrichtung;
- Figuren 3a und 3b: den Bewegungsablauf der Scheibenwischvorrichtung beim Aufprall eines Fußgängers;
- Fig. 4: eine Detailansicht auf die Aufnahmeöffnungen.

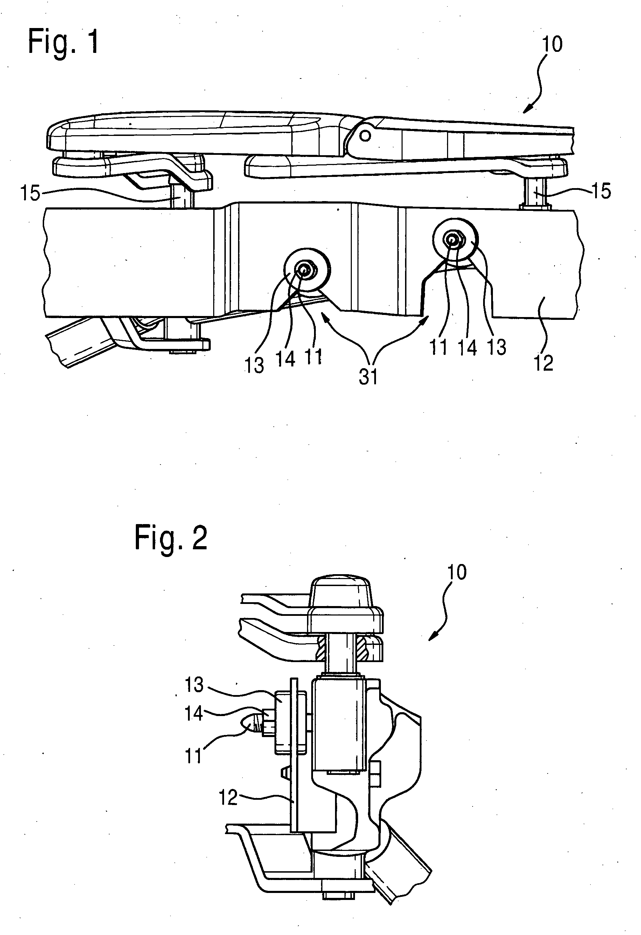

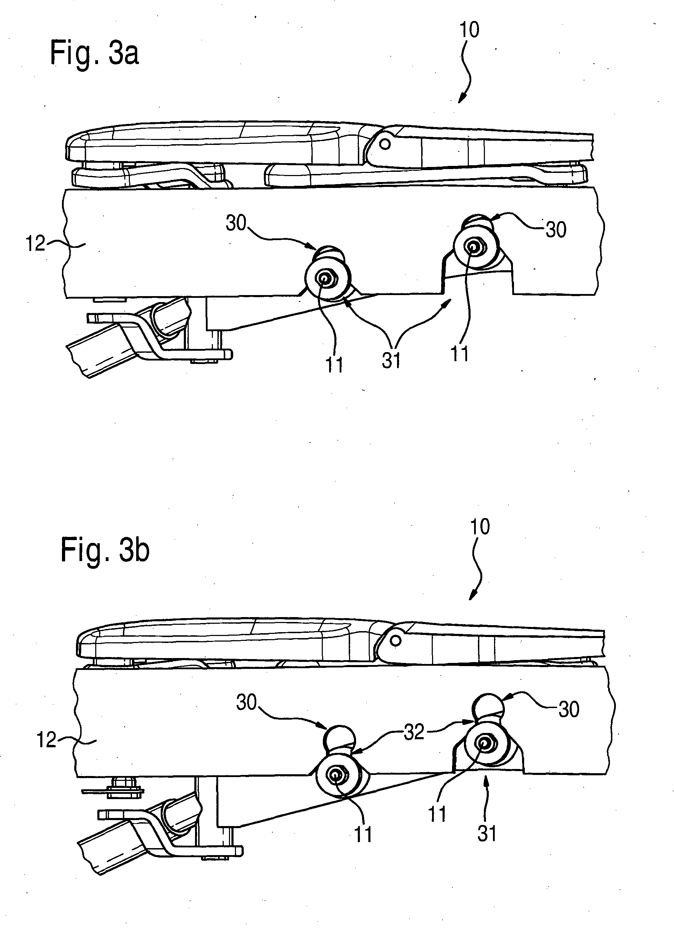

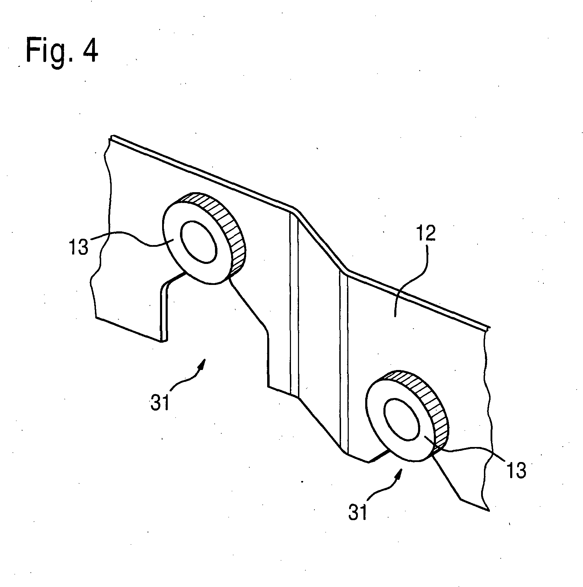

Die Figuren 1 und 2 zeigen eine Scheibenwischvorrichtung 10, die mit Schrauben 11 an einer Karosserie 12 befestigt ist. Die Schrauben 11 sind durch Gummielemente 13 (siehe auch Fig. 4) gesteckt. In der Karosserie 12 sind Aufnahmeöffnungen 30 (siehe Figuren 3a und 3b) vorgesehen, in denen die Schrauben 11 zusammen mit den Gummielementen 13 angeordnet sind.

An den Gummielementen 13 sind Muttern 14 befestigt, in welche die Schrauben 11 eingeschraubt werden können (Figuren 1 und 2).

Unterhalb der Aufnahmeöffnungen 30 sind Schlitze 31 vorgesehen, entlang denen die Schrauben 11 zusammen mit den Gummielementen 13 aus den Aufnahmeöffnungen 30 herausgedrückt werden, wenn ein Fußgänger auf die Scheibenwischvorrichtung 10 aufprallt.

Beim Aufprall des Fußgängers auf die Scheibenwischvorrichtung 10 weichen also die Schrauben 11 und die Gummielemente 13 entlang der Schlitze 31 dem Aufprall nach unten aus. Dadurch senkt sich die gesamte Scheibenwischvorrichtung 10 nach unten (siehe Figuren 3a und 3b), wodurch die Verletzungsgefahr für den Fußgänger deutlich reduziert wird.

Die Aufnahmeöffnungen 30 weisen am Übergang zu den Schlitzen 31 eine Engstelle 32 auf (siehe Fig. 3b). Die Engstellen 32 gewährleisten den Schrauben 11 und den Gummielementen 13 bei Erschütterungen während der Fahrt einen sicheren Halt in den Aufnahmeöffnungen 30.

Unterhalb der Engstellen 32 nimmt die Breite der Schlitze zu, so dass die Schrauben 11, die Gummielemente 13 und die mit ihnen verbundene Scheibenwischvorrichtung 10 beim Aufprall des Fußgängers schnell nach unten bewegt werden können.

Die Schlitze 31 verlaufen parallel zu Wischerwellen 15 (siehe Fig. 1). Dadurch können die Schrauben 11 und die Gummielemente 13 optimal aus den Aufnahmeöffnungen 30 herausgedrückt werden, wenn der Fußgänger auf die Scheibenwischvorrichtung 10 prallt.

## Patentansprüche

1. Scheibenwischanordnung, insbesondere für Kraftfahrzeuge mit einer Scheibenwischvorrichtung (10), die mit einer Karosserie (12) verschraubt ist, wobei Aufnahmeöffnungen (30), die zur Aufnahme von Schrauben (11) vorgesehen sind, am Rand einen Schlitz (31) aufweisen,
**dadurch gekennzeichnet, dass** die Aufnahmeöffnungen (30) in der Karosserie (12) vorgesehen sind und dass der Schlitz (31) der jeweiligen Aufnahmeöffnung (30) parallel zu einer Wischerwelle (15) verläuft und V-förmig mit einer Engstelle (32) im Übergangsbereich zur Aufnahmeöffnung (30) derart ausgebildet ist, dass der Abstand der Schlitzränder hinter der Engstelle (32) immer größer wird.

2. Scheibenwischanordnung nach Anspruch 1,
**dadurch gekennzeichnet, dass** die Engstelle (32) maximal so breit wie der Durchmesser der Schrauben (11) ist.

3. Scheibenwischanordnung nach Anspruch 1 oder 2,
**dadurch gekennzeichnet, dass** die Schrauben (11) jeweils durch ein Gummielement (13) gesteckt und zusammen mit dem Gummielement (13) in der Aufnahmeöffnung (30) der Karosserie (12) angeordnet sind.

4. Scheibenwischanordnung nach Anspruch 3,
**dadurch gekennzeichnet, dass** an dem Gummielement (13) eine Mutter (14) befestigt ist.

5. Scheibenwischanordnung nach einem der Ansprüche 1 bis 4,
**dadurch gekennzeichnet, dass** eine Lösekraft, mit der die Schrauben (11) aus den Aufnahmeöffnungen (30) herauszudrücken sind, über das Anzugsmoment der Schrauben (11) festgelegt ist.

6. Scheibenwischanordnung nach einem der Ansprüche 1 bis 5,
**dadurch gekennzeichnet, dass** die Scheibenwischvorrichtung (10) Aufnahmeöffnungen zur Aufnahme der Schrauben (11) vorsieht.

## Claims

1. Windscreen wiper arrangement, in particular for motor vehicles with a windscreen wiper device (10), which is screwed to a body (12), wherein receiving openings (30) which are provided for receiving screws (11) have a slot (31) at the edge, **characterized in that** the receiving openings (30) are provided in the body (12), and **in that** the slot (31) of the respective receiving opening (30) runs parallel to a wiper shaft (15) and is of V-shaped design with a narrow point (32) in the transition region to the receiving opening (30) in such a manner that the distance between the slot edges becomes ever greater behind the narrow point (32).

2. Windscreen wiper arrangement according to Claim 1, **characterized in that** the narrow point (32) is at maximum the same width as the diameter of the screws (11).

3. Windscreen wiper arrangement according to Claim 1 or 2, **characterized in that** the screws (11) are each inserted through a rubber element (13) and are arranged together with the rubber element (13) in the receiving opening (30) in the body (12).

4. Windscreen wiper arrangement according to Claim 3, **characterized in that** a nut (14) is fastened to the rubber element (13).

5. Windscreen wiper arrangement according to one of Claims 1 to 4, **characterized in that** a release force with which the screws (11) can be squeezed out of the receiving openings (30) is defined via the tightening torque of the screws (11).

6. Windscreen wiper arrangement according to one of Claims 1 to 5, **characterized in that** the windscreen wiper device (10) provides receiving openings for receiving the screws (11).

## Revendications

1. Agencement d'essuie-glace, en particulier pour véhicules automobiles comprenant un dispositif d'essuie-glace (10), lequel est vissé sur une carrosserie (12), des ouvertures de réception (30), qui sont prévues pour recevoir des vis (11), comprenant une fente (31) sur le bord,
**caractérisé en ce que** les ouvertures de réception (30) sont prévues dans la carrosserie (12), et **en ce que** la fente (31) de l'ouverture de réception respective (30) s'étend parallèlement à un arbre d'essuie-glace (15) et est réalisée en forme de V présentant un resserrement (32) dans la région de transition vers l'ouverture de réception (30), de telle sorte que l'écartement des bords de fente derrière le resserrement (32) soit de plus en plus grand.

2. Agencement d'essuie-glace selon la revendication 1,
**caractérisé en ce que** le resserrement (32) est au maximum aussi large que le diamètre des vis (11).

3. Agencement d'essuie-glace selon la revendication 1 ou 2,
**caractérisé en ce que** les vis (11) sont respectivement insérées à travers un élément en caoutchouc (13) et sont disposées, conjointement avec l'élément en caoutchouc (13), dans l'ouverture de réception (30) de la carrosserie (12).

4. Agencement d'essuie-glace selon la revendication 3,
**caractérisé en ce qu'**un écrou (14) est fixé sur l'élément en caoutchouc (13).

5. Agencement d'essuie-glace selon l'une quelconque des revendications 1 à 4,
**caractérisé en ce qu'**une force de desserrement, à l'aide de laquelle les vis (11) peuvent être poussées hors des ouvertures de réception (30), est déterminée par le couple de serrage des vis (11).

6. Agencement d'essuie-glace selon l'une quelconque des revendications 1 à 5,
**caractérisé en ce que** des ouvertures de réception pour la réception des vis (11) sont prévues dans le dispositif d'essuie-glace (10).
